# EUROPÄISCHE PATENTSCHRIFT

(11) **EP 0 639 117 B1**
(45) Veröffentlichungstag und Bekanntmachung des Hinweises auf die Patenterteilung: **21.02.1996**
(21) Anmeldenummer: 93911788.3
(22) Anmeldetag: 30.04.1993
(51) Int. Cl.: B23B 29/034, G01D 5/26

(54) **WERKZEUGKOPF FÜR DEN EINSATZ IN WERKZEUGMASCHINEN**
TOOL HEAD FOR USE IN MACHINE-TOOLS
TETE D'OUTIL A UTILISER DANS LES MACHINES-OUTILS

(30) Priorität: 04.05.1992 DE 4214337
(43) Veröffentlichungstag der Anmeldung: 22.02.1995
(73) Patentinhaber: KOMET Präzisionswerkzeuge Robert Breuning GmbH, D-74354 Besigheim (DE)
(72) Erfinder: STOLZ, Gerhard, D-74379 Ingersheim (DE); SCHEER, Gerhard, D-74369 Löchgau (DE)
(74) Vertreter: Wolf, Eckhard, Dr.-Ing.
(86) Internationale Anmeldenummer: EP9301047
(87) Internationale Veröffentlichungsnummer: WO9322090

(56) Entgegenhaltungen:
- WO-A-91/03345
- PATENT ABSTRACTS OF JAPAN vol. 7, no. 270 (P-240)(1415) 2. Dezember 1983 & JP-A-58 151 514 (HITACHI K.K.) 8 September 1983

## Beschreibung

Die Erfindung betrifft einen Werkzeugkopf für den Einsatz in Werkzeugmaschinen gemäß Oberbegriff der Patentansprüche 1 und 2.

Es ist ein Werkzeugkopf dieser Art bekannt (WO91/03345), bei welchem die die kapazitiven Meßstrukturen aufweisenden Oberflächen der Substratplatten in unmittelbarer Nähe der Drehachse in zur Drehachse senkrechten Ebenen fliehkraftneutral angeordnet sind. Die erste Substratplatte ist dabei mit ihrer der Meßstruktur gegenüberliegenden axial nach außen weisenden Oberfläche mit einer Tragfläche des Schiebers flächig verbunden, während die zweite Substratplatte mit ihrer die Meßstruktur aufweisenden Oberfläche gegen zwei unter Freilassung der Meßstruktur im Abstand voneinander angeordnete Montageleisten angeklebt ist, die mit ihren über den Substratplattenrand überstehenden freien Enden an einer axial ausgerichteten Montagefläche des Grundkörpers befestigt sind, während die Substratplatte in eine zentrale Ausnehmung dieser Montageplatte eingreift. Mit dieser Befestigungstechnik wird erreicht, daß die die Meßstruktur tragende Oberfläche der Substratplatte mit der Montagefläche des Grundkörpers exakt fluchtet. Diese Anordnung ist jedoch nur möglich, wenn die Substratplatten fliehkraftneutral angeordnet sind. Es gibt jedoch Werkzeugkonstruktionen, bei denen beispielsweise wegen zentraler Einbauten eine fliehkraftneutrale Anordnung der Substratplatten nicht möglich ist. Bei einer exzentrischen Anordnung der Substratplatten können die bekannten Maßnahmen wegen der an den Substratplatten angreifenden Fliehkräfte nicht übernommen werden. Hinzu kommt, daß vor allem bei der Verwendung von keramischen Substratplatten Maßtoleranzen in der Wandstärke von ± 100 µm auftreten können, die bei der vorbekannten Anordnung nicht ohne weiteres kompensiert werden können, wenn man berücksichtigt, daß die Spaltweite zwischen den aktiven Oberflächen der Substratplatten bei kapazitiven Meßstrukturen nur 10 bis 20 µm betragen darf.

Ausgehend von diesem Stand der Technik liegt der Erfindung die Aufgabe zugrunde, einen Werkzeugkopf der eingangs angegebenen Art zu entwickeln, der trotz außermittiger Anordnung der die Meßstrukturen tragenden Substratplatten eine genaue Verstellwegmessung sowie einen Toleranzausgleich ermöglicht.

Zur Lösung dieser Aufgabe werden die im Patentanspruch 1 angegebenen Merkmale vorgeschlagen. Weitere vorteilhafte Ausgestaltungen und Weiterbildungen der Erfindung ergeben sich aus den Unteransprüchen.

Die erfindungsgemäße Lösung geht von dem Gedanken aus, daß die die Meßstrukturen aufweisenden Oberflächen der Substratplatten in zur Drehachse parallelen exzentrischen Tangentialebenen angeordnet sind, daß die radial innen liegende Substratplatte mit ihrer der Meßstruktur gegenüberliegenden, radial nach innen weisenden Oberfläche mit einer schieberseitigen Tragstruktur verbunden ist, daß die radial außen liegende Substratplatte von einer grundkörperseitigen Tragstruktur unterstützt ist, und daß die schieberseitige und/oder grundkörperseitige Tragstruktur durch einen durch Oberflächenab- oder -auftrag nach Maßgabe der einzustellenden Spaltweite und/ oder Planparallelität abstimmbaren Flächenabschnitt des Schiebers oder Grundkörpers gebildet ist.

Alternativ hierzu ist es auch möglich, daß die eine Substratplatte mit einer schieberseitigen Tragstruktur verbunden ist, daß die andere Substratplatte von einer grundkörperseitigen Tragstruktur unterstützt ist und daß die schieberseitige und/oder grundkörperseitige Tragstruktur einen durch Oberflächenab- oder -auftrag nach Maßgabe der einzustellenden Spaltweite und/oder Planparallelität abstimmbaren Flächenabschnitt des Schiebers oder Grundkörpers aufweist.

Eine vorteilhafte Ausgestaltung der Erfindung sieht vor, daß die Meßskala und der Sensor in Form von kapazitiven Meßstrukturen auf den Oberflächen der Substratplatten angeordnet sind. Abweichend hiervon können die Meßskala und der Sensor auch in Form von inkrementalen Meßstrukturen auf den Substratplatten angeordnet sein. Hierbei ist die sensorseitige Substratplatte zweckmäßig Bestandteil eines optoelektronischen Abtastkopfes einer inkrementalen Meßeinrichtung.

Die Tragstruktur weist vorteilhafterweise eine Tragfläche auf, mit welcher die der Meßstruktur gegenüberliegende Oberfläche der betreffenden Substratplatte flächig verbunden ist.

Vorteilhafterweise ist dabei die Tragstruktur Bestandteil einer Tragleiste, die in eine radiale Fensteraussparung des Schiebers bzw. Grundkörpers oder eines mit dem Schieber oder Grundkörper starr verbindbaren Substratträgers lösbar einsetzbar ist.

Gemäß einer vorteilhaften Ausgestaltung der Erfindung ist die radial innen liegende Substratplatte mit Hilfe einer vorzugsweise aus einem "Sekundenkleber" bestehenden Klebstoffschicht mit der Tragfläche verbunden. Mit der elastischen Klebstoffschicht können unterschiedliche Temperaturausdehnungen des keramischen Trägersubstrats und des metallischen Schiebers ausgeglichen werden.

Vorteilhafterweise ist die radial innen liegende Substratplatte in einer radial nach außen offenen Ausnehmung des Schiebers angeordnet. Damit kann die betreffende Substratplatte mit ihrer die Meßstruktur tragenden Oberfläche gegenüber einer benachbarten Gleit- und Verschiebeebene des Schiebers versenkt in der Ausnehmung angeordnet werden. Dies ist eine wesentliche Voraussetzung dafür, daß auch meßstrukturseitig oberflächenkontaktierte Substratplatten, wie sie bei der fotochemischen Herstellung entstehen, ohne Kollisionsgefahr mit den Gleit- und Verschiebeflächen eingesetzt werden können. Aus konstruktiven Gründen hat es sich als besonders vorteilhaft erwiesen, wenn die Tragfläche oder die Fensteraussparung zur Aufnahme der Tragleiste an einem vorzugsweise winkelförmigen, am Schieber lösbar befestigbaren Substratträger angeordnet ist, und der Schieber an einem radial innerhalb der radial innen liegenden Substratplatte und deren benachbarten Gleit- und Verschiebefläche angeordneten Bereich mit radial nach außen weisenden und axial zu der dem Schneidwerkzeug oder Werkzeugträger gegenüberliegenden Seitenflächen an einem grundkörperfesten Schubführungsteil abgestützt und geführt ist. Die radial nach außen weisende Gleit- und Verschiebefläche des Substratträgers übernimmt hierbei also keine Führungsfunktion für den Schieber. Da der Schieber im Grundkörper regelmäßig einer Schmierung bedarf, die Meßstrukturen auf den Substratplatten jedoch von einem Schmiermittelzutritt freigehalten werden müssen, ist es vorteilhaft, wenn im Bereich der Gleit- und Verschiebefläche des Schiebers oder der Grundplatte eine die Substratplatten über den gesamten Verschiebeweg des Schiebers umfassenden Nut zur Aufnahme eines umlaufenden Dichtungsrings angeordnet ist. Der Dichtungsring ist dabei zweckmäßig als Abstreifring, insbesondere Quadring ausgebildet. Um die über den Dichtungsring auf den Substratträger übertragenen Reaktionskräfte aufnehmen zu können, trägt der Substratträger auf seiner der Substratplatte gegenüberliegenden Seite vorteilhafterweise eine gegen eine radial nach außen weisende Gleitfläche des Grundkörpers, insbesondere im Bereich des Schubführungsteils radial anliegende Gleit- und Stützleiste vorzugsweise aus Hartmetall.

Gemäß einer weiteren vorteilhaften Ausgestaltung der Erfindung ist zwischen dem Substratkörper und dem Schubführungsteil ein sich in Verschieberichtung erstreckender Zwischenraum zur Aufnahme einer Schleppverbindung für mit dem Grundkörper und der Auswerteelektronik verbundene Anschlußkabel der radial innen liegenden Substratplatte angeordnet. Weiter hat es sich als zweckmäßig erwiesen, daß die Fensteraussparung zur Aufnahme der Tragleiste für die radial außen liegende Substratplatte ebenfalls in einem am Grundkörper lösbar befestigbaren Substratträger angeordnet ist. Zur Erleichterung der Montage können die Substratträger mit vormontierten Tragleisten und Substratplatten gemeinsam in einen axial zugänglichen Zwischenraum zwischen Grundkörper und Schieber eingeführt und an den letzteren befestigt werden. Die Handhabung der an die Auswerteelektronik anzuschließenden Kabel wird erleichtert, wenn im Bereich der Fensteraussparung ein zwischen Substratträger und Tragleiste von der Tragfläche zur Rückseite des Substratträgers führender Kabelkanal zur Aufnahme der von der Seite der Meßstrukturen der Substratplatten zur Auswerteelektronik führenden Anschlußdrähte oder -fahnen angeordnet ist.

Für die Laufruhe und Bearbeitungsgenauigkeit des Werkzeugkopfes hat es sich als besonders vorteilhaft erwiesen, wenn der Schieber auf seiner dem Substratträger diametral gegenüberliegenden Seite zusätzlich einen dem Substratträger entsprechenden Masseausgleichskörper trägt.

Eine bevorzugte Ausgestaltung der Erfindung sieht vor, daß die radial außen liegende Substratplatte lose gegen ihre Tragfläche anliegend unter der Einwirkung gummielastisch abgefederter Klemmorgane gegen die Tragfläche angepreßt wird. Zum Anklemmen der betreffenden Substratplatte sind vorteilhafterweise zwei im Abstand voneinander die Fensteraussparung auf der Seite der Substratplatte übergreifende, vorzugsweise mit einem Elastomer ausgefütterte, im Bereich ihrer freien Enden am Grundkörper anschraubbare laschenartige Klemmorgane vorgesehen.

Die abstimmbare Tragfläche kann dabei durch eine stufenförmig an der Tragleiste überstehende Plattform gebildet sein, während die Tragleiste mit seitlich an der überstehenden Plattform angeformten Flanschen in einer stufenförmigen Randausnehmung der Fensteraussparung des Grundkörpers bzw. des Schiebers befestigbar ist.

Durch eine geeignete Montagehilfe kann die radial innen liegende Substratplatte bezüglich der benachbarten Gleit- und Verschiebeebene des Schiebers sowohl in radialer Richtung als auch in Verschieberichtung im Zuge ihrer Befestigung am Schieber exakt ausgerichtet werden. Der notwendige Toleranzausgleich erfolgt zweckmäßig über die radial außen liegende Substratplatte durch Vermessung und Oberflächenabtrag der zugehörigen Tragleiste im Bereich ihrer Tragfläche. Dementsprechend kann die Tragfläche je nach den auszugleichenden Toleranzen gegenüber der benachbarten Gleit- und Verschiebeebene des Grundkörpers versenkt, fluchtend oder überstehend in der Fensterausnehmung angeordnet sein. Da die radial innen liegende Substratplatte in ihrer Schieberausnehmung vorzugsweise versenkt angeordnet ist, wird die radial außen liegende Substratplatte mit ihrer die Meßstruktur tragenden Oberfläche gegenüber der benachbarten Gleit- und Verschiebefläche des Grundkörpers vorzugsweise überstehend angeordnet sein. Zur Aufnahme von überstehenden Teilen der radial außen liegenden Substratplatte und der Klemmorgane sind zweckmäßig in der Gleit- und Verschiebeebene des Schiebers zusätzliche, radial nach außen offene Ausnehmungen vorgesehen.

Weiter hat es sich als vorteilhaft erwiesen, wenn die die Meßskala tragende Substratplatte am Schieber und die den Sensor tragende Substratplatte am Grundkörper angeordnet ist.

Eine bevorzugte Ausgestaltung der Erfindung sieht vor, daß der Schieber über eine axial im Grundkörper ausgerichtete, extern betätigbare Zugstange verschiebbar ist, wobei die Zugstange mindestens eine in eine Schrägverzahnung des Schiebers eingreifende, hierzu komplementäre Schrägverzahnung als Getriebemittel aufweisen kann. Eine solche Schieberverstellung ist bereits bei Plan- und Ausdrehköpfen an sich bekannt (DE-C-26 08 930). Im Grundkörper ist dort zweckmäßig ein weiterer, gegenüber dem ersten Schieber über die Zugstange gegensinnig verschiebbarer Massenausgleichsschieber vorgesehen.

Gemäß einer weiteren vorteilhaften Ausgestaltung der Erfindung ist die Auswerteelektronik mit einem vorzugsweise in einem Umfangsring des Werkzeugkopfs angeordneten optoelektronischen Sender-Empfänger für den Datenaustausch mit einer externen Sende-Empfangseinrichtung verbunden. Damit ist es möglich, über eine CNC-Steuerung, die an die externe Sende-Empfangseinrichtung einerseits und an einen Antriebsmechanismus für die Zugstange angeschlossen ist, den Schieber des Werkzeugkopfes im Sinne einer CNC-Achse zu bewegen und zu positionieren.

Die Auswerteelektronik ist ebenso wie die Elektronik des Sender-Empfängers in dem vorzugsweise aus Leichtmetall bestehenden Umfangsring angeordnet. Der Umfangsring kann dabei gegenüber dem Grundkörper vorzugsweise durch eine umlaufende Metallfolie abgedichtet und/oder abgeschirmt werden. Zur Befestigung wird der Umfangsring vorteilhafterweise zwischen einem Flanschdeckel und einer Ringschulter des Grundkörpers unter Zwischenklemmen von an den stirnseitigen Enden des Umfangsrings angeordneten umlaufenden Dichtungsringen eingeklemmt.

Die Auswerteelektronik im Werkzeugkopf kann batteriebetrieben sein. Besonders vorteilhaft ist jedoch eine induktive Energie- und Datenübertragungsstrecke zwischen der im rotierenden Werkzeugkopf angeordneten Meß- und Auswerteeinrichtung und einer externen Steuereinrichtung. Durch die induktive Energie- und Datenkopplung kann die Batterie entfallen. Die Energie- und Datenkopplung arbeitet hierbei zweckmäßig im Hochfrequenzbereich, wobei der Datenaustausch zweckmäßig auf die durch die Energiezuführung gebildete Trägerfrequenz moduliert ist. Die induktive Energiezufuhr ermöglich auch die motorische Ansteuerung des Schiebers innerhalb des Werkzeugkopfes, was bei Batteriebetrieb nicht ohne weiteres möglich ist.

Im Falle der inkrementalen Verschiebewegmessung ist der Abtastkopf zweckmäßig in einer am Grundkörper oder am Schieber befestigten Tragplatte eingespannt und zusammen mit dieser um eine zur Substratplattenebene senkrechte Achse gegenüber der gegenüberliegenden, als Meßskala ausgebildeten Substratplatte verschwenkbar und justierbar.

Im folgenden wird die Erfindung anhand einiger in der Zeichnung in schematischer Weise dargestellter Ausführungsbeispiele näher erläutert. Es zeigen
- Fig. 1a: eine Draufsicht auf einen Plandrehkopf in teilweise aufgebrochener Darstellung;
- Fig. 1b: einen vergrößerten Ausschnitt aus Fig. 1a;
- Fig. 2a: einen Axialschnitt durch den Plandrehkopf nach Fig. 1a;
- Fig. 2b: einen vergrößerten Ausschnitt aus Fig. 2a;
- Fig. 3a und b: eine Draufsicht und einen Längsschnitt des grundkörperseitigen Substratträgers;
- Fig. 4a und b: eine Draufsicht und einen Längsschnitt der grundkörperseitigen Tragleiste;
- Fig. 5a und b: eine Draufsicht und einen Querschnitt (im Einbauzustand) des schieberseitigen Substratträgers;
- Fig. 6a und b: eine Draufsicht und eine stirnseitige Ansicht der Tragleiste für den Substratträger nach Fig. 5;
- Fig. 7: ein Schema einer CNC-Steuerung der Schieberbewegung des Plandrehkopfes;
- Fig. 8a: eine Draufsicht auf einen gegenüber Fig. 1a abgewandelten Plandrehkopf in teilweise aufgebrochener Darstellung;
- Fig. 8b: einen Axialschnitt durch den Plandrehkopf nach Fig. 8a;
- Fig. 8c: eine Draufsicht auf den Schieber in Richtung des Pfeils X der Fig. 8a.

Die in der Zeichnung dargestellten Werkzeugköpfe sind als Plan- und Ausdrehköpfe für den Einsatz in Werkzeugmaschinen bestimmt. Der Werkzeugkopf besteht im wesentlichen aus einem um eine Drehachse 12 drehbaren Grundkörper 10, einem im Grundkörper 10 quer zur Drehachse 12 verschiebbaren, einen Paßzapfen 14 mit Pendelbolzen 16 für den Anschluß eines Werkzeugträgers aufweisenden, quer zur Drehachse 12 im Grundkörper 10 verschiebbaren Arbeitsschieber 18 sowie einem in entgegengesetzter Richtung des Arbeitsschiebers 18 im Grundkörper 10 verschiebbaren Ausgleichsschieber 20. Die Betätigung des Arbeitsschiebers 18 und des Ausgleichsschiebers 20 erfolgt über eine extern verschiebbare Zugstange 22, die mit ihren einander diametral gegenüberliegenden Schrägverzahnungen 24 mit komplementären Schrägverzahnungen 26,28 des Arbeitsschiebers 18 und des Ausgleichsschiebers 20 in Eingriff steht. Die Schrägverzahnungen 26,28 des Arbeitsschiebers 18 und des Ausgleichsschiebers 20 sind entgegengesetzt unter dem gleichen Winkel geneigt, während die Zugstange 22 zwei sich kreuzende, entgegengesetzt geneigte Schrägverzahnungen aufweist. Mit dieser Maßnahme wird erreicht, daß sich der Arbeitsschieber 18 und der Ausgleichsschieber 20 beim Verschieben der Zugstange 22 nach entgegengesetzten Seiten verschieben.

Der Verstellweg des Arbeitsschiebers 18 kann mit Hilfe einer zwischen Arbeitsschieber 18 und Grundkörper 10 im Inneren des Werkzeugkopfs angeordneten kapazitiven oder inkrementalen Wegmeßeinrichtung 30 gemessen werden.

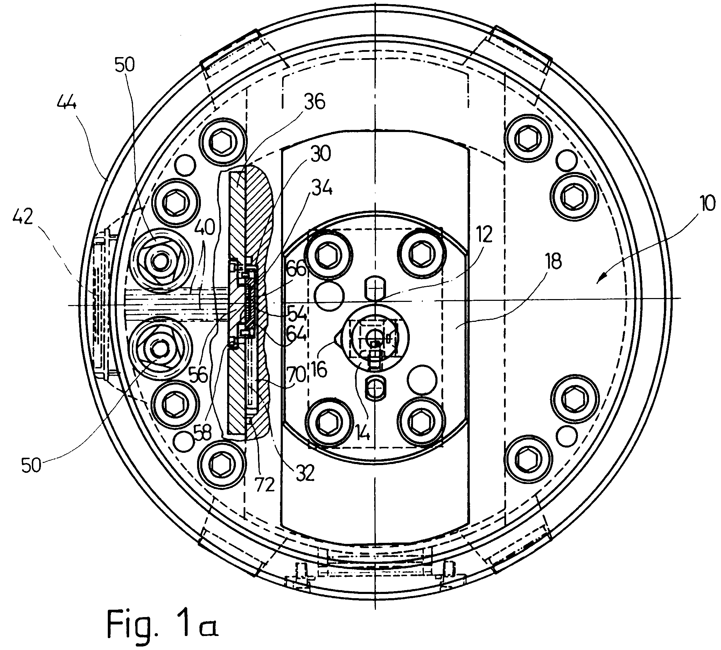

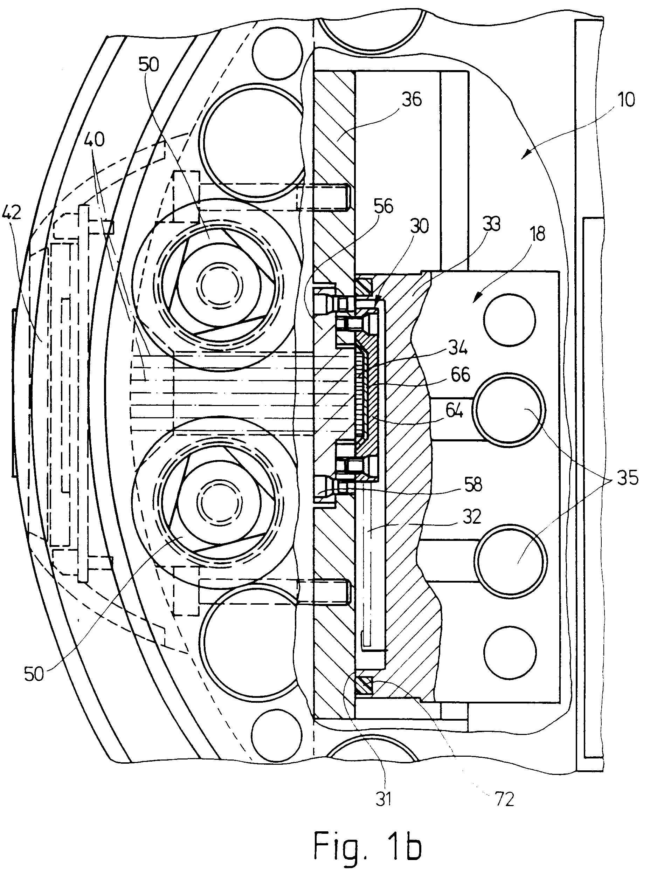

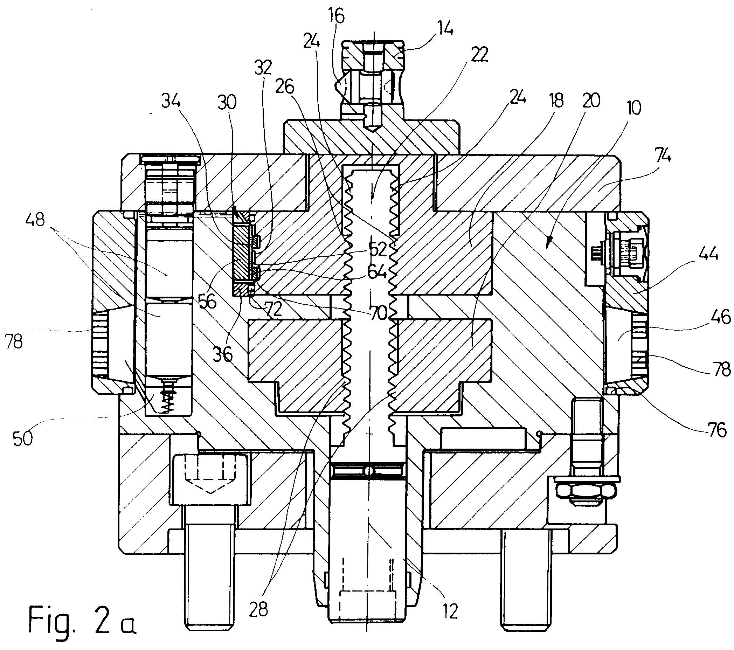

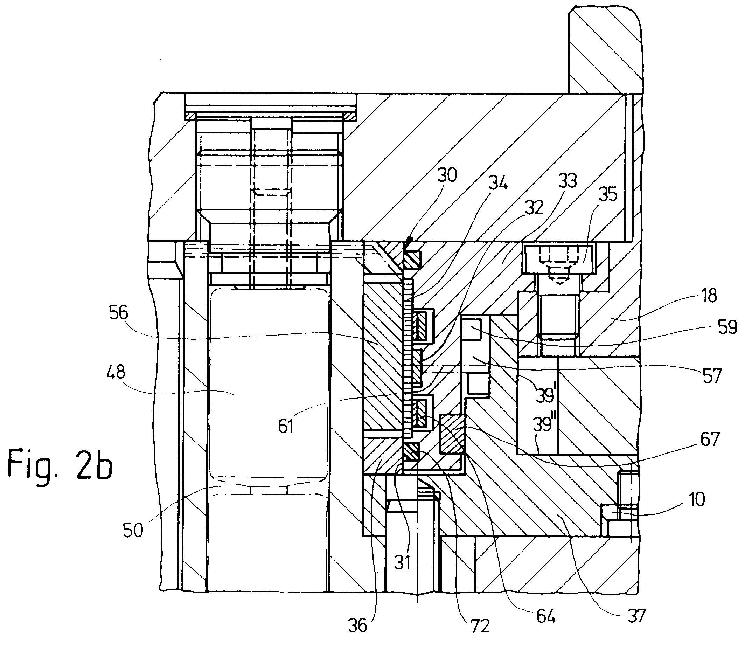

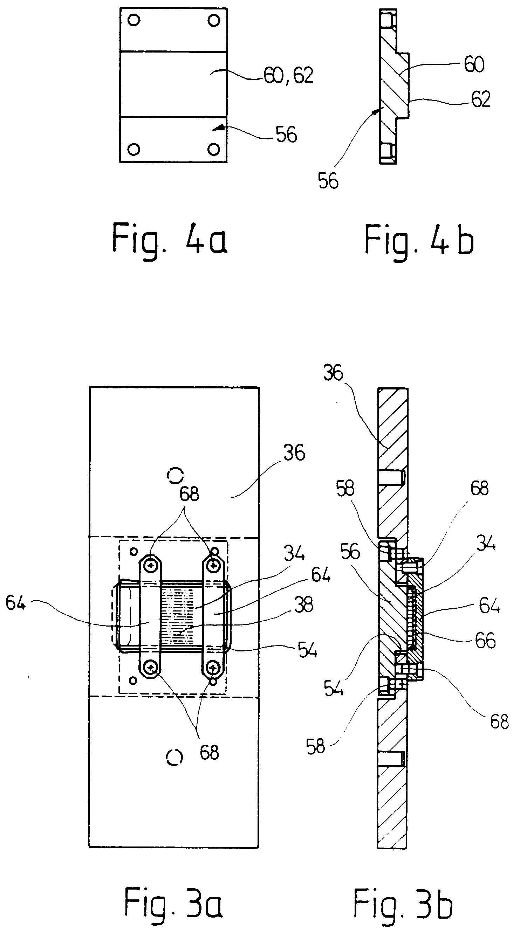

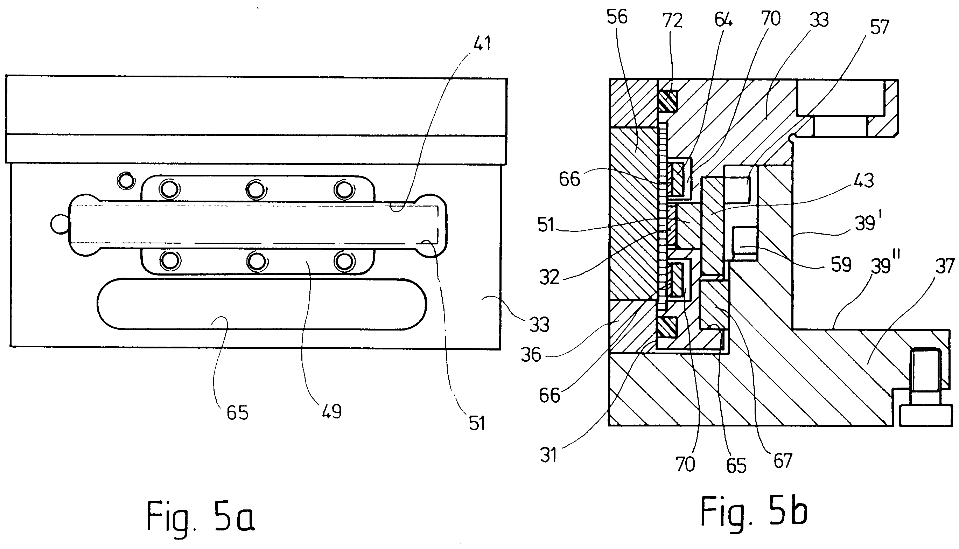

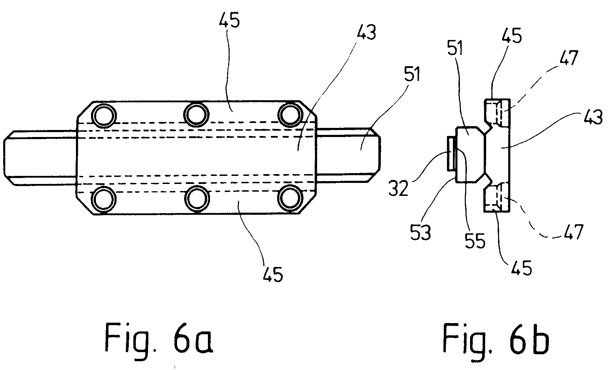

Die kapazitive Meßeinrichtung 30 nach Fig. 1 bis 6 umfaßt im wesentlichen zwei Substratplatten 32,34 aus keramischem Material, von denen die eine, radial innen liegende Substratplatte 32 mit dem Arbeitsschieber 18 und die andere, radial außen liegende Substratplatte 34 mit einem grundkörperfesten Substratträger 36 verbunden ist. Die Substratplatten 32,34 tragen an ihren einander zugewandten Oberflächen eine vorzugsweise fotochemisch aufgetragene kapazitive Meßstruktur 38. Die Meßstruktur der mit dem Arbeitsschieber 18 verbundenen Substratplatte 32 ist dabei als Meßskala ausgebildet, während die Meßstruktur 38 der mit dem Grundkörper 10 verbundenen Substratplatte 34 als Sensor fungiert. Die Meßstrukturen 38 der Substratplatten 32, 34 sind über Leitungen 40 an eine Auswerteelektronik 42 angeschlossen, die in einem durch einen Aluminiumring 44 begrenzten Umfangsgehäuse 46 des Werkzeugkopfs angeordnet ist. Die Stromversorgung der Auswerteelektronik 42 sowie weiterer elektronischer Baugruppen erfolgt hier über Batterien 48, die in Batteriefächern 50 des Grundkörpers 10 angeordnet sind.

Wie aus den Fig. 1b, 2b und 5b zu ersehen ist, ist die schieberseitige Substratplatte 32 an der radial nach außen weisenden Gleit- und Verschiebefläche 31 eines winkelförmigen Substratträgers 33 angeordnet, der mittels axial ausgerichteter Schrauben 35 starr mit dem Schieber 18 verbunden ist. Die Führung des Schiebers 18 in Verschieberichtung erfolgt in einem im Querschnitt im wesentlichen U-förmigen, grundkörperfesten Schubführungsteil 37, und zwar im Bereich der Führungsflächen 39' und 39''. Der schieberseitige Substratträger 33 weist eine radial durchgehende Fensteröffnung 41 auf, in die radial von innen eine stufenförmig ausgebildete Tragleiste 43 eingesetzt und an den Flanschteilen 45 mittels Schrauben 47 im stufenförmigen Randbereich 49 zur Fensteröffnung 41 befestigt ist. Die Tragleiste 43 weist an ihrem plattformartig überstehenden Plattenteil 51 eine radial durch die Fensteröffnung 41 nach außen weisende Tragfläche 53 auf, an der die schieberseitige Substratplatte 32 mit Hilfe einer Klebstoffschicht 55 befestigt ist. Die Tragfläche 53 kann durch Oberflächenabtrag (Abschleifen) zur Einstellung der notwendigen Planparallelität der einander gegenüberliegenden Substratplatten abgestimmt werden. Zwischen dem Substratträger 33 und dem Schubführungsteil 37 ist ein Zwischenraum 57 ausgespart, in welchem die Anschlußkabel 61 der schieberseitigen Substratplatte 32 über eine Kabelschleppeinrichtung 59 zu der grundkörperseitig angeordneten Auswerteelektronik 42 geführt sind. Zum Ausgleich des Trägheitsmoments befindet sich auf der dem Substratkörper 33 diametral gegenüberliegenden Seite des Arbeitsschiebers 18 ein in der Zeichnung nicht dargestellter Ausgleichskörper.

Zur Positionierung der radial außen liegenden Substratplatte 34 weist der grundkörperfeste Substratträger 36 eine Fensteraussparung 54 auf, in die radial von außen eine stufenförmig ausgebildete Tragleiste 56 eingesetzt und mittels Schrauben 58 befestigt ist. Die Tragleiste 56 weist an ihrem plattformartig überstehenden Plattenteil 60 eine radial durch die Fensteraussparung 54 nach innen weisende Tragfläche 62 für die Substratplatte 34 auf, die durch Oberflächenabtrag (Abschleifen) in ihrer Höhe so abgestimmt werden kann, daß zwischen den beiden Substratplatten 32 und 34 ein Spalt von 10 bis 20 µm verbleibt. Die Substratplatte 34 wird mit ihrer der Meßstruktur 38 gegenüberliegenden, radial nach außen weisenden Oberfläche auf die Tragfläche 62 der montierten Tragleiste 56 aufgelegt und mittels zweier im Abstand voneinander angeordneter Laschen 64, die mit elastomerem Material 66 ausgefüttert und mittels Schrauben 68 an den grundkörperfesten Substratträger 36 befestigt sind, gegen die Tragfläche 62 angedrückt. Im Arbeitsschieber 18 sind zusätzliche Aussparungen 70 vorgesehen, in die die über den grundkörperfesten Substratträger 36 überstehenden Laschen eingreifen.

Eine umlaufende Quadring-Dichtung 72 die auf der Schieberseite den gesamten Bereich der Wegmeßeinrichtung 30 umgibt, sorgt dafür, daß das Schmieröl aus der Schieberführung beim Verschieben des Schiebers abgestreift wird und nicht in den Innenbereich der Meßeinrichtung 30 gelangen kann. Die über die Dichtung 72 auf den schieberseitigen Substratträger 33 übertragenden Dichtkräfte werden über die sich auf der Außenseite des Schubführungsteils 37 abstützende, in der Nut 65 des Substratkörpers 33 angeordnete, aus Hartmetall bestehende Stütz- und Gleitleiste 67 übertragen.

Der das Umfangsgehäuse 46 bildende Aluminiumring 44 ist zwischen einem Flanschdeckel 74 und einer Ringschulter 76 des Grundkörpers dicht eingespannt. Weiter enthält der Aluminiumring 44 mehrere in Umfangsrichtung verteilt angeordnete Fensteröffnungen 78 zur Unterbringung von Sende- und Empfangselementen für Infrarotstrahlung, die mit einer im Umfangsgehäuse 46 angeordneten Sende- und Empfangselektronik elektrisch verbunden sind. Durch die Sende- und Empfangselemente kann Infrarotlicht auch bei schnelldrehendem Werkzeugkopf rundum gesendet und empfangen werden.

Im Aluminiumring 44 befindet sich außerdem eine mit einer entsprechenden Elektronik verbundene Schnittstelle 79 für den seriellen oder Datenaustausch mit einem externen Computer.

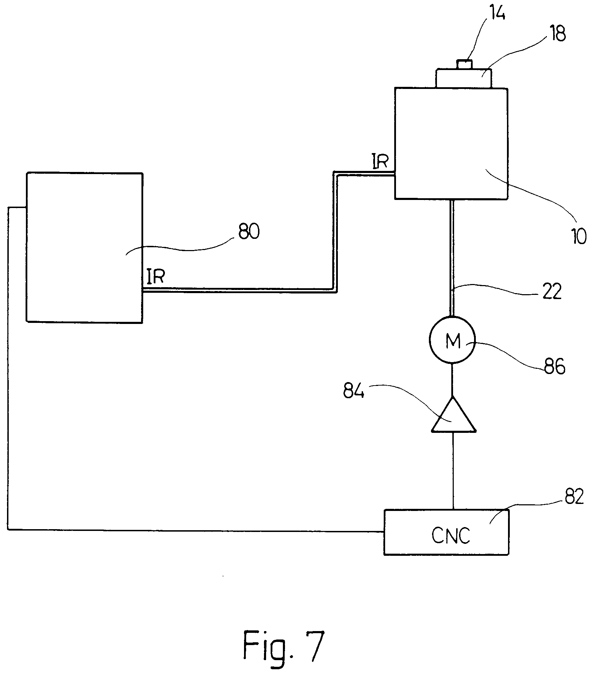

Die Kommunikation mit der im Werkzeugkopf angeordneten Elektronik erfolgt über eine externe Sende- und Empfangseinrichtung 80 für Infrarotstrahlung, die ihrerseits mit einer CNC-Steuerung 82, gegebenenfalls unter Zwischenschaltung einer Anpassungselektronik zur Koordinierung des Datenaustauschs, verbunden werden kann. Damit ist es möglich, über die CNC-Steuerung 82, einen Servoverstärker 84 und einen die Zugstange 22 betätigenden Motor 86 den Arbeitsschieber 18 des Werkzeugkopfes durch ein NC-Programm im Sinne einer CNC-Achse zu bewegen und zu positionieren (Fig. 7).

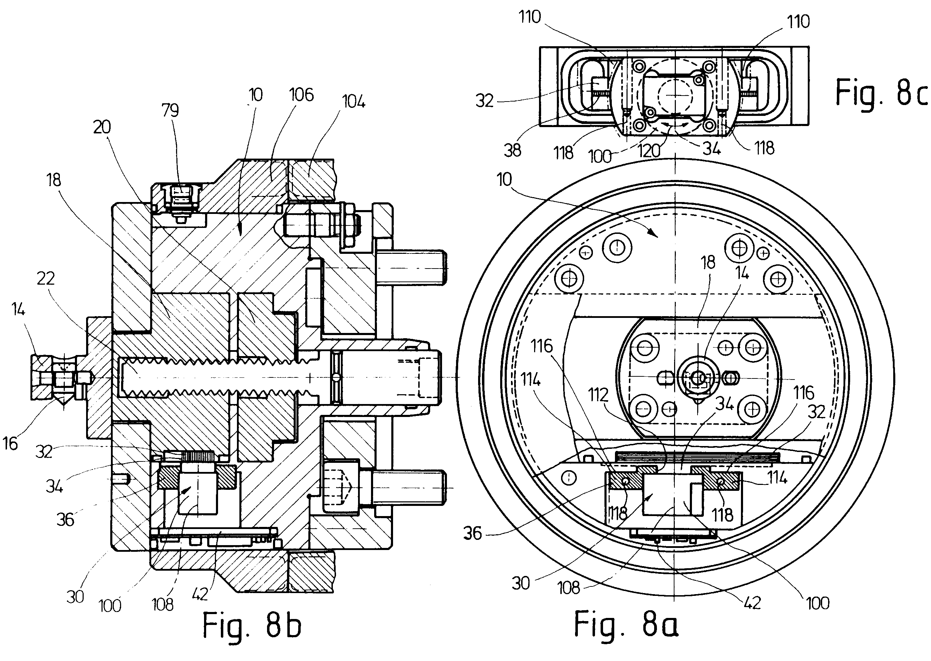

Bei dem in Fig. 8a bis c gezeigten Ausführungsbeispiel ist eine inkrementale Wegmeßeinrichtung 30 zur unmittelbaren Bestimmung des Verstellwegs des Arbeitsschiebers 18 vorgesehen, die eine radial innen liegende, mit dem Arbeitsschieber 18 verbundene, als Inkrementalmaßstab ausgebildete Substratplatte 32 und einen mit einem grundkörperfesten Substratträger 36 verbundenen optoelektronischen Abtastkopf 100 aufweist. Der Abtastkopf weist an seiner der Substratplatte 32 zugewandten Seite ein Fenster 34 mit einer inkrementalen Meßstruktur auf, die in einem optoelektronischen Strahlengang auf die Meßstruktur 38 des Maßstabs 32 abgebildet und innerhalb des Abtastkopfs in ein elektronisches Ausgangssignal übergeführt wird. Das elektronische Ausgangssignal wird in der Auswerteelektronik 42 unter Bildung eines Wegmeßsignals ausgewertet.

Wie aus Fig. 8a zu ersehen ist, erfolgt die Stromversorgung der Auswerteelektronik 42 über ein induktives Energiekopplungssystem, bestehend aus einer maschinenfesten Statorspule 104 und einer werkzeugkopffesten Rotorspule 106. Die Datenübertragung von der Auswerteelektronik zu einem externen Steuerungs- und Auswertesystem erfolgt ebenfalls induktiv über die Rotorspule 106 und die Statorspule 104, und zwar durch Modulation der Datensignale auf die Trägerfrequenz der Stromzufuhr. Die maschinenseitig angeordnete Statorspule 104 ist zweckmäßig ringförmig oder segmentförmig ausgebildet und um die Maschinenspindel herum am nicht dargestellten Spindelkasten angeordnet. Die Rotorspule 106 kann unmittelbar am Werkzeugkopf oder an einem zwischen Werkzeugkopf und Spindel angeordnetem Zwischenflansch angeordnet und mit dem Werkzeugkopf elektrisch verbunden werden.

Der Abtastkopf 100 ist an dem als Flanschplatte ausgebildeten Substratträger 36 angeordnet, der einen Durchbruch 112 für das Meßfenster 34 sowie einen Flanschansatz 114 zur Befestigung am Grundkörper aufweist. Zur Einstellung der Spaltweite zwischen dem Fenster 34 des Abtastkopfs 100 und der Substratplatte 32 erfolgt durch Materialauf- oder -abtrag im Bereich der Abstimmfläche 116 zwischen dem Flanschansatz 114 und der zugehörigen Anschlagfläche am Grundkörper. Zur Feinjustierung des Abtastkopfes 100 ist dieser in der Flanschplatte 36 um seine Achse 108 gegenüber der inkrementalen Meßstruktur 38 der Maßstab-Substratplatte 32 mittels Stellschrauben 118 in Richtung des Doppelpfeils 120 verstellbar. Grundsätzlich ist es möglich, auch eine Ausrichtung des Abtastkopfes um mindestens eine der beiden zur Achse 108 senkrechte Achsen beispielsweise in einem nicht dargestellten Kugelgelenk vorzunehmen. Bei entsprechender Gestaltung des Abtastkopfes kann statt einer getrennten Flanschplatte 36 auch das Gehäuse des Abtastkopfes mit angeformtem Flanschansatz 114 zur unmittelbaren Befestigung am Grundkörper vorgesehen werden.

Wie aus Fig. 8c zu ersehen ist, ist die Substratplatte 32 mittels Klemmpratzen 110 am Arbeitsschieber 18 eingespannt und von einer umlaufende Quadring-Dichtung 72 umgeben.

Die in Fig. 8a bis c gezeigte Ausführungsform kann grundsätzlich auch dahingehend abgewandelt werden, daß der Abtastkopf nicht radial, sondern achsparallel am Grundkörper ausgerichtet ist. In diesem Falle ist die Maßstab-Substratplatte 32 um 90° gegenüber dem Ausführungsbeispiel nach Fig. 8a bis c am Arbeitsschieber anzuordnen.

Zusammenfassend ist folgendes festzustellen: Die Erfindung bezieht sich auf einen Werkzeugkopf für den Einsatz in Werkzeugmaschinen mit einem relativ zum Grundkörper 10 quer zu dessen Drehachse 12 verstellbaren, mit einem Werkzeugträger bestückbaren Schieber 18 sowie einer Einrichtung 30 zur direkten Messung des Verstellwegs des Schiebers 18. Die Meßeinrichtung 30 weist zwei Substratplatten 32,34 auf, an deren einander zugewandten Oberflächen kapazitive Meßstrukturen einer Meßskala und eines Sensors angeordnet sind. Die Substratplatten 32,34 sind erfindungsgemäß in zur Drehachse parallelen exzentrischen Tangentialebenen angeordnet, wobei die radial innen liegende Substratplatte mit einer Tragfläche des Schiebers 18 flächig verbunden ist, während die radial außen liegende Substratplatte von einer durch Oberflächenabtrag abstützbaren Tragfläche 62 einer in eine radiale Fensteraussparung 54 des Grundkörpers 10,36 lösbar einsetzbaren Tragleiste 56 flächig unterstützt ist.

## Patentansprüche

1. Werkzeugkopf für den Einsatz in Werkzeugmaschinen mit einem um eine Drehachse (12) rotierenden Grundkörper (10), mindestens einem relativ zum Grundkörper (10) vorzugsweise quer zur Drehachse (12) verstellbaren, mit mindestens einem Schneidwerkzeug oder einem Werkzeugträger bestückbaren Schieber (18), einer aus einer Meßskala (32) und einem Sensor (34) bestehenden Einrichtung (30) zur direkten Messung des Verstellwegs des Schiebers (18) relativ zum Grundkörper (10) und einer Auswertelektronik (42) zur Auswertung und/oder Anzeige der Wegmeßergebnisse, wobei die Meßskala und der Sensor in Form von Meßstrukturen (38) auf einer Oberfläche je einer ebenen, mit dem Schieber (18) bzw. dem Grundkörper (10) verbundenen Substratplatte (32,34), vorzugsweise aus Glas, Keramik oder Metall so angeordnet sind, daß die die Meßstrukturen (38) aufweisenden Oberflächen in durch einen Spalt voneinander getrennten, zueinander parallelen Verschiebeebenen ausgerichtet sind, wobei die die die Meßstrukturen (38) aufweisenden Oberflächen der Substratplatten (32,34) in zur Drehachse (12) parallelen exzentrischen Tangentialebenen angeordnet sind, **dadurch gekennzeichnet**, daß die radial innen liegende Substratplatte (32) mit ihrer der Meßstruktur gegenüberliegenden, radial nach innen weisenden Oberfläche mit einer schieberseitigen Tragstruktur (33,53) verbunden ist, daß die radial außen liegende Substratplatte (34) von einer grundkörperseitigen Tragstruktur (36,62) unterstützt ist, und daß die schieberseitige und/oder grundkörperseitige Tragstruktur einen durch Oberflächenab- oder -auftrag nach Maßgabe der einzustellenden Spaltweite und/oder Planparallelität abstimmbaren Flächenabschnitt des Schiebers oder Grundkörpers aufweist.

2. Werkzeugkopf für den Einsatz in Werkzeugmaschinen mit einem um eine Drehachse (12) rotierenden Grundkörper (10), mindestens einem relativ zum Grundkörper (10) vorzugsweise quer zur Drehachse (12) verstellbaren, mit mindestens einem Schneidwerkzeug oder einem Werkzeugträger bestückbaren Schieber (18), einer aus einer Meßskala (32) und einem Sensor (34) bestehenden Einrichtung (30) zur direkten Messung des Verstellwegs des Schiebers (18) relativ zum Grundkörper (10) und einer Auswertelektronik (42) zur Auswertung und/oder Anzeige der Wegmeßergebnisse, wobei die Meßskala und der Sensor in Form von Meßstrukturen (38) auf einer Oberfläche je einer ebenen, mit dem Schieber (18) bzw. dem Grundkörper (10) verbundenen Substratplatte (32,34), vorzugsweise aus Glas, Keramik oder Metall so angeordnet sind, daß die die Meßstrukturen (38) aufweisenden Oberflächen in durch einen Spalt voneinander getrennten, zueinander parallelen Verschiebeebenen ausgerichtet sind, wobei die die Meßstrukturen (38) aufweisenden Oberflächen der Substratplatten (32, 34) in zur Drehachse (12) senkrechten Radialebenen angeordnet sind, **dadurch gekennzeichnet**, daß die eine Substratplatte (32) mit einer schieberseitigen Tragstruktur (33,53) verbunden ist, daß die andere Substratplatte (34) von einer grundkörperseitigen Tragstruktur (36,62) unterstützt ist und daß die schieberseitige und/oder grundkörperseitige Tragstruktur einen durch Oberflächenab- oder -auftrag nach Maßgabe der einzustellenden Spaltweite und/oder Planparallelität abstimmbaren Flächenabschnitt des Schiebers oder Grundkörpers aufweist.

3. Werkzeugkopf nach Anspruch 1 oder 2, **dadurch gekennzeichnet**, daß die Meßskala (32) und der Sensor (34) in Form von kapazitiven Meßstrukturen (38) auf den Oberflächen der Substratplatten angeordnet sind.

4. Werkzeugkopf nach Anspruch 1 oder 2, **dadurch gekennzeichnet**, daß die Meßskala (32) und der Sensor in Form von inkrementalen Meßstrukturen (38,102) auf den Substratplatten (32,36) angeordnet sind.

5. Werkzeugkopf nach einem der Ansprüche 1, 2 oder 4, **dadurch gekennzeichnet**, daß die sensorseitige Substratplatte (36) Bestandteil eines optoelektronischen Abtastkopfes (100) einer inkrementalen Meßeinrichtung (30) ist.

6. Werkzeugkopf nach einem der Ansprüche 1 bis 5, **dadurch gekennzeichnet**, daß die Tragstruktur eine Tragfläche (53,62) aufweist, mit welcher die der Meßstruktur (38) gegenüberliegende Oberfläche der betreffenden Substratplatte (32,34) flächig verbunden ist.

7. Werkzeugkopf nach einem der Ansprüche 1 bis 6, **dadurch gekennzeichnet**, daß die Tragstruktur eine Tragleiste (43,56) aufweist, die in eine radiale Fensteraussparung (41,54) des Schiebers (18,33) bzw. des Grundkörpers (10,36) oder eines mit dem Schieber oder dem Grundkörper starr verbindbaren Substratträgers (33, 36) lösbar einsetzbar ist.

8. Werkzeugkopf nach einem der Ansprüche 1 bis 7, **dadurch gekennzeichnet**, daß die radial innen liegende Substratplatte (32) mit Hilfe einer Klebstoffschicht (55) mit der Tragfläche (53) einer Tragstruktur verbunden ist.

9. Werkzeugkopf nach einem der Ansprüche 1 bis 8, **dadurch gekennzeichnet**, daß die radial innen liegende Substratplatte (32) in einer radial nach außen offenen Ausnehmung (52) des Schiebers (18) angeordnet ist.

10. Werkzeugkopf nach Anspruch 9, **dadurch gekennzeichnet**, daß die radial innen liegende Substratplatte (32) mit ihrer die Meßstruktur tragenden Oberfläche gegenüber einer benachbarten Gleit- und Verschiebefläche des Schiebers (18) versenkt in der Ausnehmung (52) angeordnet ist.

11. Werkzeugkopf nach einem der Ansprüche 6 bis 10, **dadurch gekennzeichnet**, daß die Tragfläche (53) oder die Fensteraussparung (41) zur Aufnahme der schieberseitigen Tragleiste (43) an einem vorzugsweise winkelförmigen, am Schieber (18) lösbar befestigbaren Substratträger (33) angeordnet ist, und daß der Schieber (18) in einem radial innerhalb der schieberseitigen Substratplatte (32) und deren benachbarten Gleit- und Verschiebefläche (31) angeordneten Bereich mit radial nach außen weisenden und axial zu der dem Schneidwerkzeug oder Werkzeugträger (14) gegenüberliegenden Führungsflächen (39', 39'') an einem grundkörperfesten Schubführungsteil (37) abgestützt und geführt ist.

12. Werkzeugkopf nach Anspruch 11, **dadurch gekennzeichnet**, daß der schieberseitige Substratträger (33) auf seiner der Substratplatte (32) gegenüberliegenden Seite eine gegen eine radial nach außen weisende Gleitfläche des Grundkörpers (10), insbesondere im Bereich des Schubführungsteils (37), radial anliegende Gleit- und Stützleiste (67), vorzugsweise aus Hartmetall, trägt.

13. Werkzeugkopf nach Anspruch 11 oder 12, **dadurch gekennzeichnet**, daß zwischen dem Substratträger (33) und dem Schubführungsteil (37) ein sich in Verschieberichtung des Schiebers erstreckender Zwischenraum (57) zur Aufnahme einer Schleppverbindung (59) für mit der grundkörperseitigen Auswerteelektronik (42) verbundene Anschlußkabel (61) der radial innen liegenden Substratplatte (32) angeordnet ist.

14. Werkzeugkopf nach einem der Ansprüche 7 bis 13, **dadurch gekennzeichnet**, daß der Schieber (18) auf seiner dem Substratträger (33) diametral gegenüberliegenden Seite einen dem Substratträger (33) entsprechenden Ausgleichskörper trägt.

15. Werkzeugkopf nach einem der Ansprüche 7 bis 14, **dadurch gekennzeichnet**, daß die Fensteraussparung (54) zur Aufnahme der Tragleiste (56) für die radial außen liegende Substratplatte (34) in einem am Grundkörper (10) lösbar befestigten Substratträger (36) angeordnet ist.

16. Werkzeugkopf nach Anspruch 15, **dadurch gekennzeichnet**, daß die Substratträger mit vormontierten Tragleisten (56,43) oder Klemmpratzen und Substratplatten (32,34) gemeinsam in einen axial zugänglichen Zwischenraum zwischen Grundkörper (10) und Schieber (18) einführbar und an letzteren befestigbar sind.

17. Werkzeugkopf nach einem der Ansprüche 7 bis 16, **dadurch gekennzeichnet**, daß im Bereich der Fensteraussparung (54,41) ein zwischen Substratträger (33, 36) und Tragleiste (56,43) von der Tragfläche (62, 53) zur Rückseite des Substratträgers (33,56) führender Kabelkanal zur Aufnahme der von der Seite der Meßstrukturen (38) der Substratplatten (32,34) zur Auswerteelektronik (42) führenden Anschlußkabel oder -fahnen (40,61) angeordnet ist.

18. Werkzeugkopf nach einem der Ansprüche 6 bis 17, **dadurch gekennzeichnet**, daß die lose gegen die Tragfläche (62) anliegende radial außen liegende Substratplatte (34) vorzugsweise unter der Einwirkung gummielastisch abgefederter Klemmorgane (64) gegen die Tragfläche (62) angepreßt ist.

19. Werkzeugkopf nach einem der Ansprüche 6 bis 18, **dadurch gekennzeichnet**, daß die abstimmbare Tragfläche (62) durch eine stufenförmig an der Tragleiste (43,56) überstehende Plattform (51,60) gebildet ist.

20. Werkzeugkopf nach Anspruch 19, **dadurch gekennzeichnet**, daß die Tragleiste (43,56) mit seitlich an der überstehenden Plattform (51,60) angeformten Flanschteilen (45) in einer stufenförmigen Randausnehmung der Fensteraussparung (41,54) befestigbar ist.

21. Werkzeugkopf nach einem der Ansprüche 7 bis 20, **dadurch gekennzeichnet**, daß zwei im Abstand voneinander die Fensteraussparung (54) auf der Seite der radial außen liegenden Substratplatte (34) übergreifende, vorzugsweise mit einem Elastomer ausgefütterte, im Bereich ihrer freien Enden am Grundkörper (10,36) anschraubbare laschenartige Klemmorgane (64) vorgesehen sind.

22. Werkzeugkopf nach einem der Ansprüche 6 bis 21, **dadurch gekennzeichnet**, daß die Tragfläche (53,62) gegenüber der benachbarten Gleit- und Verschiebefläche des Grundkörpers (10,34) bzw. Schiebers (18,33) versenkt, fluchtend oder überstehend in der Fensterausnehmung angeordnet ist.

23. Werkzeugkopf nach einem der Ansprüche 1 bis 22, **dadurch gekennzeichnet**, daß die radial außen liegende Substratplatte (34) mit ihrer die Meßstruktur (38) tragenden Oberfläche gegenüber der benachbarten Gleit- und Verschiebefläche des Grundkörpers (10, 36) überstehend angeordnet ist.

24. Werkzeugkopf nach einem der Ansprüche 1 bis 23, **dadurch gekennzeichnet**, daß in der Gleit- und Verschiebefläche des Schiebers (18) weitere zum Grundkörper (10,36) hin randoffene Ausnehmungen (70) zur Aufnahme von überstehenden Teilen der radial außen liegenden Substratplatte und der Klemmorgane (64) angeordnet sind.

25. Werkzeugkopf nach einem der Ansprüche 1 bis 24, **dadurch gekennzeichnet**, daß im Bereich der Gleit- und Verschiebefläche des Schiebers (18) oder des Grundkörpers (10,36) eine die Substratplatten (32, 34) in allen Verschiebelagen des Schiebers (18) umfassende Nut zur Aufnahme eines umlaufenden Dichtungsrings (72) angeordnet ist.

26. Werkzeugkopf nach Anspruch 25, **dadurch gekennzeichnet**, daß der Dichtungsring (72) als Abstreifring, insbesondere als Quadring ausgebildet ist.

27. Werkzeugkopf nach einem der Ansprüche 1 bis 26, **dadurch gekennzeichnet**, daß die die Meßskala tragende Substratplatte (32) auf der Schieberseite und die den sensorseitige Substratplatte (34) auf der Grundkörperseite angeordnet ist.

28. Werkzeugkopf nach einem der Ansprüche 1 bis 27, **dadurch gekennzeichnet**, daß der Schieber (18) über eine axial im Grundkörper (10) ausgerichtete, extern betätigbare Zugstange (22) verschiebbar ist.

29. Werkzeugkopf nach Anspruch 28, **dadurch gekennzeichnet**, daß die Zugstange (22) mindestens eine in eine Schrägverzahnung (26) des Schiebers (18) eingreifende, hierzu komplementäre Schrägverzahnung (24) als Getriebemittel aufweist.

30. Werkzeugkopf nach Anspruch 28 oder 29, **dadurch gekennzeichnet**, daß im Grundkörper ein weiterer gemeinsam mit dem ersten Schieber (18) über die Zugstange (22) gegensinnig verschiebbarer Ausgleichsschieber (20) angeordnet ist.

31. Werkzeugkopf nach einem der Ansprüche 1 bis 30, **dadurch gekennzeichnet**, daß die Auswerteelektronik (42) mit einem vorzugsweise in einem Umfangsring (44,46) des Werkzeugkopfs angeordneten optoelektronischen Sender-Empfänger für den Datenaustausch mit einer externen Sende-Empfangseinrichtung (80) verbunden ist.

32. Werkzeugkopf nach Anspruch 31, **gekennzeichnet durch** eine an die externe Sende-Emfangseinrichtung und einen Antriebsmechanismus (82,84) für die Zugstange (22) angeschlossene CNC-Steuereinrichtung zur Bewegung und Positionierung des Schiebers (18).

33. Werkzeugkopf nach Anspruch 31 oder 32, **dadurch gekennzeichnet**, daß die Auswerteelektronik in dem vorzugsweise aus Leichtmetall bestehenden Umfangsring (44) angeordnet ist.

34. Werkzeugkopf nach Anspruch 33, **dadurch gekennzeichnet**, daß der Umfangsring (44) gegenüber dem Grundkörper (10) vorzugsweise durch eine umlaufende Metallfolie abgedichtet und/oder abgeschirmt ist.

35. Werkzeugkopf nach einem der Ansprüche 31 bis 34, **dadurch gekennzeichnet**, daß der Umfangsring (44) zwischen einem Flanschdeckel (74) und einer Ringschulter (76) des Grundkörpers (10) unter Zwischenklemmen von am Umfangsring beidseitig angeordneten umlaufenden Dichtungsringen eingeklemmt ist.

36. Werkzeugkopf nach einem der Ansprüche 1 bis 35, **dadurch gekennzeichnet**, daß die Auswerteelektronik (30) batteriebetrieben ist.

37. Werkzeugkopf nach einem der Ansprüche 1 bis 35, **gekennzeichnet durch** eine induktive Energie- und Datenübertragungsstrecke (104,106) zwischen der Meß- und Auswerteelektronik (30) und einer externen Steuer- und Auswerteeinrichtung.

38. Werkzeugkopf nach Anspruch 37, **dadurch gekennzeichnet**, daß die Energie- und Datenübertragungsstrecke eine werkzeugkopffeste Rotorspule (106) und eine maschinenfeste Statorspule (104) aufweist.

39. Werkzeugkopf nach einem der Ansprüche 1 bis 38, **dadurch gekennzeichnet**, daß der Arbeitsschieber (18) innerhalb des Werkzeugkopfes mittels eines über die induktive Energieübertragungsstrecke mit Strom beaufschlagten, im Werkzeugkopf angeordneten Elektromotor verstellbar ist.

40. Werkzeugkopf nach einem der Ansprüche 1 bis 39, **dadurch gekennzeichnet**, daß der Abtastkopf (100) in einem am Grundkörper (10) oder am Arbeitsschieber (18) befestigbaren Tragplatte eingespannt und zusammen mit dieser um eine zur Substratplattenebene senkrechte Achse (108) gegenüber der als Meßskala ausgebildeten Substratplatte (32) verschwenkbar und justierbar ist.

## Claims

1. A tool head for use in machine tools, having a main body (10) rotating about a rotational axis (12), having at least one slide (18), which is adjustable relative to the main body (10), preferably transversely to the rotational axis (12), and can be armed with at least one cutting tool or a tool carrier, having a device (30), comprising a measuring scale (32) and a sensor (34), for directly measuring the path of adjustment of the slide (18) relative to the main body (10), and having evaluating electronics for the evaluation or display of the path-measurement findings, the measuring scale and the sensor being disposed, in the form of measuring structures (38), in such a way on a surface of a respective flat substrate plate (32,34) connected to the slide (18) and main body (10) respectively, which substrate plate is preferably made of glass, ceramics or metal, that the surfaces exhibiting the measuring structures (38) are aligned in displacement planes which are separated from one another by a gap and run parallel to one another, wherein those surfaces of the substrate plates (32,34) which exhibit the measuring structures (38) are disposed in eccentric tangential planes running parallel to the rotational axis (12), characterized in that the radially inner substrate plate (32) is connected, by its surface opposing the measuring structure and pointing radially inwards, to a bearing structure (33,53) on the slide side, that the radially outer substrate plate (34) is supported by a bearing structure (36,62) on the main body side, and that the bearing structure on the slide and/or main body side exhibits a surface segment of the slide or main body, which surface segment can be matched by surface coating or surface abrasion on the basis of the gap width and/or plane-parallelism to be set.

2. A tool head for use in machine tools, having a main body (10) rotating about a rotational axis (12), having at least one slide (18), which is adjustable relative to the main body (10), preferably transversely to the rotational axis (12), and can be armed with at least one cutting tool or a tool carrier, having a device (30), comprising a measuring scale (32) and a sensor (34), for directly measuring the path of adjustmenht of the slide (18) relative to the main body (10), and having evaluating electronics (42) for the evaluation or display of the path-measurement findings, the measuring scale and the sensor being disposed, in the form of measuring structures (38), in such a way on a surface of a respective flat substrate plate (32,34) connected to the slide (18) and main body (10) respectively, which substrate plate is preferably made of glass, ceramics or metal, that the surfaces exhibiting the measuring structures (38) are aligned in displacement planes which are separated from one another by a gap and run parallel to one another, wherein those surfaces of the substrate plates (32,34) exhibiting the measuring structures (38) are disposed in eccentric radial planes running perpendicular to the rotational axis (12), characterized in that the one substrate plate (32) is connected to a bearing structure (33,53) on the slide side, that the other substrate plate (34) is supported by a bearing structure (36,62) on the main body side, and that the bearing structure on the slide and/or main body side exhibits a surface segment of the slide or main body, which surface segment can be matched by surface coating or surface abrasion on the basis of the gap width and/or plane-parallelism to be set.

3. The tool head as claimed in claim 1 or 2, wherein the measuring scale (32) and the sensor (34) are disposed in the form of capacitive measuring structures (38) on the surfaces of the substrate plates.

4. The tool head as claimed in claim 1 or 2, wherein the measuring scale (32) and the sensor are disposed in the form of incremental measuring structures (38,102) on the substrate plates (32,36).

5. The tool head as claimed in claim 1, 2, or 4, wherein the substrate plate (36) on the sensor side is a component part of an optoelectronic scanning head (100) of an incremental measuring device (30).

6. The tool head as claimed in one of claims 1 to 5, wherein the bearing structure exhibits a bearing face (53,62) to which that surface of the substrate plate (32,34) in question opposing the measuring structure (38) is flatly connected.

7. The tool head as claimed in one of claims 1 to 6, wherein the bearing structure exhibits a bearing strip (43,56) which is detachably insertable into a radial window cutout (41,54) in the slide (18,33) or main body (10,36) or in a substrate carrier (33,36) which can be rigidly connected to the slide or main body.

8. The tool head as claimed in one of claims 1 to 7, wherein the radially inner substrate plate (32) is connected to the bearing face (53) of a bearing structure with the aid of an adhesive coating (55).

9. The tool head as claimed in one of claims 1 to 8, wherein the radially inner substrate plate (32) is disposed in a recess (52) in the slide (18), which recess is open radially outwards.

10. The tool head as claimed in claim 9, wherein the radially inner substrate plate (37) is disposed with its surface bearing the measuring structure, in relation to an adjacent sliding and displacement plane of the slide (18), countersunk in the recess (52).

11. The tool head as claimed in one of claims 6 to 10, wherein the bearing face (53) or the window cutout (41) for the reception of the bearing strip (43) on the slide side is disposed on a preferably angular substrate carrier (33) which can be detachably fastened to the slide (18), and wherein the slide (18), in a region disposed radially within the substrate plate (32) on the slide side and its adjacent sliding and displacement face (31), is supported and guided, by guide faces (39',39'') which point radially outwards and axially oppose the cutting tool or tool carrier (14), on a thrust guide part (37) fixed to the main body.

12. The tool head as claimed in claim 11, wherein the substrate carrier (33) on the slide side bears, on its side opposing the substrate plate (32), a sliding and supporting strip (67), preferably made from hard metal, which bears radially against a radially outward pointing slide face of the main body (10), in particular in the region of the thrust guide part (37).

13. The tool head as claimed in claim 11 or 12, wherein between the substrate carrier (33) and the thrust guide part (37) there is disposed an interspace (57), extending in the direction of displacement of the slide, for the reception of a drag connection (59) for connecting cables (61) of the radially inner substrate plate (32), which connecting cables are connected to the evaluating electronics (42) on the main body side.

14. The tool head as claimed in one of claims 7 to 13, wherein the slide (18), on its side diametrically opposing the substrate carrier (33), bears an equalizing body corresponding to the substrate carrier (33).

15. The tool head as claimed in one of claims 7 to 14, wherein the window cutout (54) for the reception of the bearing strip (56) for the radially outer substrate plate (34) is disposed in a substrate carrier (36) which can be detachably fastened to the main body (10).

16. The tool head as claimed in claim 15, wherein the substrate carriers can be introduced, with pre-fitted bearing strips (56,43) or clamping jaws and substrate plates (32,34), jointly into an axially accessible interspace between main body (10) and slide (18) and can be fastened to the latter.

17. The tool head as claimed in one of claims 7 to 16, wherein in the region of the window cutout (54,41) there is disposed a cable duct, leading between the substrate carrier (33,36) and bearing strip (56,43) from the bearing face (62,53) to the back of the substrate carrier (33,36), for the reception of those connecting cables or lugs (40,61) leading from the side of the measuring structures (38) of the substrate plates (32,34) to the evaluating electronics (42).

18. The tool head as claimed in one of claims 6 to 17, wherein the radially outer substrate plate (34), which is in loose bearing contact with the bearing face (62), is pressed against the bearing face (62) preferably under the influence of elastomerically sprung clamping members (64).

19. The tool head as claimed in one of claims 6 to 18, wherein the matchable bearing face (62) is formed by a platform (51,60) which projects in a step-shape against the bearing strip (43,56).

20. The tool head as claimed in claim 19, wherein the bearing strip (43,56) can be fastened, by flange parts (45) molded laterally onto the projecting platform (51,60), in a step-shaped marginal recess in the window cutout (41,54).

21. The tool head as claimed in one of claims 7 to 20, wherein there are provided two mutually spaced, tab-like clamping members (64), which overlap the window cutout (54) on the side of the radially outer substrate plate (34), are preferably lined with an elastomer and, in the region of their free ends, can be screwed to the main body (10,36).

22. The tool head as claimed in one of claims 6 to 21, wherein the bearing face (53,62) is disposed in the window recess in countersunk, flush or projecting arrangement in relation to the adjacent sliding and displacement plane of the main body (10,34) or the slide (18,33).

23. The tool head as claimed in one of claims 1 to 22, wherein the radially outer substrate plate (34) is disposed, with its surface bearing the measuring structure (38), in projecting arrangement in relation to the adjacent sliding and displacement face of the main body (10,36).

24. The tool head as claimed in one of claims 1 to 23, wherein in the sliding and displacement face of the slide (18) there are disposed further recesses (70), which are open at the edge in the direction of the main body (10,36), for the reception of projecting parts of the radially outer substrate plate and of the clamping members (64).

25. The tool head as claimed in one of claims 1 to 24, wherein in the region of the sliding and displacement face of the slide (18) or main body (10,36) there is disposed a groove for the reception of a circumferential sealing ring (72), which groove embraces the substrate plates in all displacement positions of the slide (18).

26. The tool head as claimed in claim 25, wherein the sealing ring (72) is configured as a scraper ring, in particular as a square ring.

27. The tool head as claimed in one of claims 1 to 26, wherein the substrate plate (32) bearing the measuring scale is disposed on the side of the slide and the substrate plate (34) on the sensor side is disposed on the side of the main body.

28. The tool head as claimed in one of claims 1 to 27, wherein the slide (18) is displaceable by means of an externally operated drawbar (22) aligned axially in the main body (10).

29. The tool head as claimed in claim 28, wherein the drawbar (22) exhibits as transmission means at least one helical gearing (24), which engages in a helical gearing (26) of the slide (18) and is complementary thereto.

30. The tool head as claimed in claim 28 or 29, wherein in the main body there is disposed a further equalizing slide (20), which is displaceable jointly with the first slide (18), by means of the drawbar (22), in the opposite direction.

31. The tool head as claimed in claim 1 to 30, wherein the evaluating electronics (42) are connected by an optoelectronic transmitter-receiver for data exchange, which transmitter-receiver is preferably disposed in a peripheral ring (44,46) of the tool head, to an external transmitting-receiving device (80).

32. The tool head as claimed in claim 31, characterized by a CNC-control system, which is connected up to the external transmitting-receiving device and to a drive mechanism (82,84) for the drawbar (22), for moving and positioning the slide (18).

33. The tool head as claimed in claim 31 or 32, wherein the evaluating electronics are disposed in the peripheral ring (44), which preferably consists of light metal.

34. The tool head as claimed in claim 33, wherein the peripheral ring (44) is sealed and/or screened against the main body (10), preferably by a circumferential metal foil.

35. The tool head as claimed in one of claims 31 to 34, wherein the peripheral ring (44) is clamped between a flange cover (74) and an annular shoulder (76) of the main body (10), circumferential sealing rings disposed on both sides of the peripheral ring being clamped in-between.

36. The tool head as claimed in one of claims 1 to 35, wherein the evaluating electronics (30) are battery-operated.

37. The tool head as claimed in one of claims 1 to 35, characterized by an inductive energy-transfer and data-transfer path (104,106) between the measuring and evaluating elecronics (30) and an external control and evaluating device.

38. The tool head as claimed in claim 37, wherein the energy-transfer and data-transfer path exhibits a tool-fixed rotor coil (106) and a machine-fixed stator coil (104).

39. The tool head as claimed in one of claims 1 to 38, wherein the working slide (18) is adjustable within the tool head by means of an electric motor, which is powered via the inductive energy-transfer path and is disposed in the tool head.

40. The tool head as claimed in one of claims 1 to 39, wherein the scanning head (100) is clamped in place in a bearing plate fastened to the main body (10) or working slide (18) and, together with the bearing plate, is pivotable and adjustable, in relation to the substrate plate (32) configured as a measuring scale, about an axis (108) running perpendicular to the plane of the substrate plate.

## Revendications

1. Tête d'outil à utiliser dans des machines-outils, comprenant un corps de base (10) tournant autour d'un axe de rotation (12), au moins un coulisseau (18) déplaçable par rapport au corps de base (10), de préférence transversalement à l'axe de rotation (12), et pouvant être équipé d'au moins un outil de coupe ou un porte-outil, un dispositif (30) pour la mesure directe du déplacement du coulisseau (18) par rapport au corps de base (10), composé d'une échelle de mesure (32) et d'un détecteur (34), et une électronique d'analyse (42) pour l'interprétation et/ou l'affichage des résultats de mesure de déplacement, l'échelle de mesure et le détecteur sous forme de structures de mesure (38) étant à chaque fois disposés sur une surface d'une plaque de substrat (32, 34), de préférence en verre, céramique ou métal, couplée avec le coulisseau (18) et respectivement le corps de base (10), de telle sorte que les surfaces présentant les structures de mesure (38) sont alignées dans des plans de déplacement parallèles séparés l'un de l'autre par une fente, les surfaces des plaques de substrat (32, 34) présentant les structures de mesure (38) étant disposées dans des plans tangentiels excentrés parallèles à l'axe de rotation (12), **caractérisée en ce** que la plaque de substrat (32) située radialement à l'intérieur est rattachée avec sa surface opposée à la structure de mesure et dirigée radialement vers l'intérieur, à une structure porteuse (33, 53) en forme de coulisseau, en ce que la plaque de substrat (34) située radialement à l'extérieur est soutenue par une structure porteuse (36, 62) située du côté du corps de base, et en ce que la structure porteuse côté coulisseau et/ou côté corps de base est constituée par une section de surface du coulisseau ou du corps de base pouvant être adaptée par enlèvement ou addition de matière en fonction de la largeur de fente à régler et/ou du parallélisme plan.

2. Tête d'outil à utiliser dans des machines-outils, comprenant un corps de base (10) tournant autour d'un axe de rotation (12), au moins un coulisseau (18) déplaçable par rapport au corps de base (10), de préférence transversalement à l'axe de rotation (12) et pouvant être équipé d'au moins un outil de coupe ou un porte-outil, un dispositif (30) pour la mesure directe du déplacement du coulisseau (18) par rapport au corps de base (10), composé d'une échelle de mesure (32) et d'un détecteur (34), et une électronique d'analyse (42) pour l'interprétation et/ou l'affichage des résultats de mesure de déplacement, l'échelle de mesure et le détecteur sous forme de structures de mesure (38) étant à chaque fois disposés sur une surface d'une plaque de substrat (32, 34), de préférence en verre, céramique ou métal, couplée avec le coulisseau (18) et respectivement le corps de base (10), de telle sorte que les surfaces présentant les structures de mesure (38) sont alignées dans des plans de déplacement parallèles séparés l'un de l'autre par une lente, les surfaces des plaques de substrat (32, 34) présentant les structures de mesure (38) étant disposées dans des plans radiaux perpendiculaires à l'axe de rotation (12), caractérisée en ce que l'une des plaques de substrat (32) est rattachée à une structure porteuse (33, 53) située du côté coulisseau, que l'autre plaque de substrat (34) est soutenue par une structure porteuse (36, 62) située du côté du corps de base, et que la structure porteuse côté coulisseau et/ou côté corps de base est constituée par une section de surface du coulisseau ou du corps de base pouvant être adaptée par enlèvement ou addition de matière en fonction de la largeur de lente à régler et/ou du parallélisme plan.

3. Tête d'outil selon l'une des revendications 1 ou 2, caractérisée en ce que l'échelle de mesure (32) et le détecteur (34) sont disposés sur les surfaces des plaques de substrat sous la forme de structures de mesure capacitives (38).

4. Tête d'outil selon l'une des revendications 1 ou 2, caractérisée en ce que l'échelle de mesure (32) et le détecteur sont disposés sur les plaques de substrat (32, 36) sous la forme de structures de mesure incrémentales (38, 102).

5. Tête d'outil selon l'une des revendications 1, 2 ou 4, caractérisée en ce que la plaque de substrat (36) située du côté détecteur fait partie d'une tête de balayage (100) optoélectronique d'un dispositif de mesure incrémental (30).

6. Tête d'outil selon l'une des revendications 1 à 5, caractérisée en ce que la structure porteuse comprend une surface d'appui (53, 62) à laquelle la surface de la plaque de substrat (32, 34) considérée opposée à la structure de mesure (38) est rattachée à plat.

7. Tête d'outil selon l'une des revendications 1 à 6, caractérisée en ce que la structure porteuse comprend une baguette de support (43, 56) qui peut être insérée de manière amovible dans un évidement de fenêtre (41, 54) du coulisseau (18, 33) et respectivement du corps de base (10, 36) ou d'un support de substrat (33, 36) qui peut être solidarisé avec le coulisseau ou le corps de base.

8. Tête d'outil selon l'une des revendications 1 à 7, caractérisée en ce que la plaque de substrat (32) située radialement à l'intérieur est rattachée à la surface d'appui (53) d'une structure porteuse à l'aide d'une couche de colle (55).

9. Tête d'outil selon l'une des revendications 1 à 8, caractérisée en ce que la plaque de substrat (32) située radialement à l'intérieur est disposée dans un évidement (52) du coulisseau (18) radialement ouvert vers l'extérieur.

10. Tête d'outil selon la revendication 9, caractérisée en ce que la plaque de substrat (32) située radialement à l'intérieur est noyée, avec sa surface portant la structure de mesure, dans l'évidement (52), par rapport à une surface de glissement et de translation voisine du coulisseau (18).

11. Tête d'outil selon l'une des revendications 6 à 10, caractérisée en ce que la surface d'appui (53) ou l'évidement de fenêtre (41) pour la réception de la baguette de support (43) située du côté coulisseau est disposé sur un support de substrat (33), de préférence angulaire, qui peut être fixé de manière amovible sur le coulisseau (18), et en ce que le coulisseau (18) est soutenu et guidé, dans une région située radialement à l'intérieur de la plaque de substrat (32) située du côté du coulisseau et sur sa surface de glissement et de translation (31), sur un élément de guidage à glissière (37) solidaire du corps de base et présentant des surfaces de guidage (39', 39'') dirigées radialement vers l'extérieur et opposées axialement par rapport à l'outil de coupe ou au porte-outil (14).

12. Tête d'outil selon la revendication 11, caractérisée en ce que le support de substrat (33) situé du côté coulisseau porte, sur sa surface opposée à la plaque de substrat (32), une baguette de glissement et de support (67), de préférence en métal dur, qui est appliquée radialement contre une surface de glissement du corps de base (10) dirigée radialement vers l'extérieur, en particulier dans la région de l'élément de guidage à glissière (37).

13. Tête d'outil selon l'une des revendications 11 ou 12, caractérisée en ce que, entre le support de substrat (33) et l'élément de guidage à glissière (37), est disposé un intervalle (57) s'étendant dans la direction de déplacement du coulisseau, pour recevoir une liaison d'entraînement (59) pour des câbles de raccordement (61) de la plaque de substrat (32) située radialement à l'intérieur, reliés à l'électronique d'analyse (42) placée du côté du corps de base.

14. Tête d'outil selon l'une des revendications 7 à 13, caractérisée en ce que le coulisseau (18) porte sur sa surface diamétralement opposée au support de substrat (33) un corps d'équilibrage correspondant au support de substrat (33).

15. Tête d'outil selon l'une des revendications 7 à 14, caractérisée en ce que l'évidement de fenêtre (54) pour la réception de la baguette de support (56) pour la plaque de substrat (34) située radialement à l'extérieur, est disposé dans un support de substrat (36) qui peut être fixé de manière amovible sur le corps de base (10).

16. Tête d'outil selon la revendication 15, caractérisée en ce que les supports de substrat avec des baguettes de support (56, 43) prémontées ou griffes de serrage et plaques de substrat (32, 34), peuvent être introduites ensemble dans un espace intermédiaire entre le corps de base (10) et le coulisseau (18) accessible dans le sens axial, et fixées sur ces derniers.

17. Tête d'outil selon l'une des revendications 7 à 16, caractérisée en ce que dans la région de l'évidement de fenêtre (54, 41) est disposée une conduite de câbles pour la réception des fils ou barrettes de raccordement (40, 61) menant du côté des structures de mesure (38) des plaques de substrat (32, 34) vers, l'électronique d'analyse (42), qui conduit, entre le support de substrat (33, 36) et la baguette de support (56, 43), de la surface d'appui (62, 53) à la face arrière du support de substrat (33, 56).

18. Tête d'outil selon l'une des revendications 6 à 17, caractérisée en ce que la plaque de substrat (34) située radialement à l'extérieur et appliquée lâchement contre la surface d'appui (62), est pressée contre la surface d'appui (62) sous l'action d'organes de serrage (64) à suspension élastique en caoutchouc.

19. Tête d'outil selon l'une des revendications 6 à 18, caractérisée en ce que la surface d'appui (62) adaptable est constituée par une plate-forme (51, 60) qui dépasse en gradins de la baguette de support (43, 56).

20. Tête d'outil selon la revendication 19, caractérisée en ce que la baguette de support (43, 56) peut être fixée avec des éléments de bride (45) conformés latéralement sur la plate-forme (51, 60) en saillie, dans un évidement latéral en gradins de l'évidement de fenêtre (41, 54).

21. Tête d'outil selon l'une des revendications 7 à 20, caractérisée en ce qu'elle comprend deux organes de serrage (64) en forme de pattes, de préférence doublés d'un élastomère, qui, dans la région de leurs extrémités libres, peuvent être vissés sur le corps de base (10, 36) et recouvrent à distance l'un de l'autre, l'évidement de fenêtre (54) sur le côté de la plaque de substrat (34) radialement extérieure.

22. Tête d'outil selon l'une des revendications 6 à 21, caractérisée en ce que la surface d'appui (53, 62) peut être noyée, disposée à fleur ou en saillie dans l'évidement de fenêtre par rapport au plan de glissement et de translation voisin du corps de base (10, 34) et respectivement du coulisseau (18, 33).

23. Tête d'outil selon l'une des revendications 1 à 22, caractérisée en ce que la plaque de substrat (34) située radialement à l'extérieur est disposée de façon que sa surface portant la structure de mesure (38) dépasse par rapport à la surface de glissement et de translation voisine du corps de base (10, 36).

24. Tête d'outil, selon l'une des revendications 1 à 23, caractérisée en ce dans la surface de glissement et de translation du coulisseau (18) sont ménagés des évidements (70) supplémentaires ouverts au bord en direction du corps de base (10, 36) et destinés à recevoir des éléments en saillie de la plaque de substrat radialement extérieure et des organes de serrage (64).

25. Tête d'outil selon l'une des revendications 1 à 24, caractérisée en ce que dans la région de la surface de glissement et de translation du coulisseau (18) ou du corps de base (10, 36) est disposée une rainure pour la réception d'un joint d'étanchéité (72) circulaire, qui entoure les plaques
de substrat (32, 34) dans toutes les positions du coulisseau (18).

26. Tête d'outil selon la revendication 25, caractérisée en ce que le joint d'étanchéité (72) est conformé en segment racleur, notamment en joint à section carrée.

27. Tête d'outil selon l'une des revendications 1 à 26, caractérisée en ce que la plaque de substrat (32) portant l'échelle de mesure est placée du côté du coulisseau et la plaque de substrat (34) côté détecteur, du côté du corps de base.

28. Tête d'outil selon l'une des revendications 1 à 27, caractérisée en ce que le coulisseau (18) peut être déplacé par l'intermédiaire d'une barre de traction (22) orientée axialement dans le corps de base (10) et pouvant être actionnée de l'extérieur.

29. Tête d'outil selon la revendication 28, caractérisée en ce que la barre de traction (22) comporte comme moyens d'entraînement au moins une denture hélicoïdale (24) qui coopère avec une denture hélicoïdale (26) du coulisseau (18) dont elle est complémentaire.

30. Tête d'outil selon l'une des revendications 28 ou 29, caractérisée en ce que dans le corps de base est disposé un coulisseau compensateur (20) supplémentaire qui peut être déplacé, conjointement avec le premier coulisseau (18), dans le sens inverse, par l'intermédiaire de la barre de traction (22).

31. Tête d'outil, selon l'une des revendications 1 à 30, caractérisée en ce que l'électronique d'analyse (42) est reliée à un émetteur-récepteur optoélectronique pour l'échange des données avec un dispositif émetteur-récepteur externe (80), placé de préférence dans une bague périphérique (44, 46) de la tête d'outil.

32. Tête d'outil selon la revendication 31, caractérisée par un dispositif de commande CNC pour le déplacement et le positionnement du coulisseau (18) raccordé au dispositif émetteur-récepteur externe et à un mécanisme d'entraînement (82, 84) pour la barre de traction (22).

33. Tête d'outil selon l'une des revendications 31 ou 32, caractérisée en ce que l'électronique d'analyse est logée dans la bague périphérique (44) constituée de préférence de métal léger.

34. Tête d'outil selon la revendication 33, caractérisée en ce que la bague périphérique (44) est rendue étanche et/ou protégée par rapport au corps de base (10), de préférence au moyen d'une feuille métallique continue.

35. Tête d'outil selon l'une des revendications 31 à 34, caractérisée en ce que la bague périphérique (44) est enserrée entre un couvercle à bride (74) et un épaulement annulaire (76) du corps de base (10), avec interposition de joints d'étanchéité circulaires disposés de part et d'autre de la bague périphérique.

36. Tête d'outil selon l'une des revendications 1 à 35, caractérisée en ce que l'électronique d'analyse (30) fonctionne sur batterie.

37. Tête d'outil selon l'une des revendications 1 à 35, caractérisée par un circuit de transmission d'énergie et de données (104, 106) inductif entre l'électronique de mesure et d'analyse ((30) et un dispositif de commande et d'analyse externe.

38. Tête d'outil selon la revendication 37, caractérisée en ce que le circuit de transmission d'énergie et de données comprend une bobine de rotor (106) solidaire de la tête d'outil et une bobine de stator (104) solidaire de la machine.

39. Tête d'outil selon l'une des revendications 1 à 38, caractérisée en ce que le coulisseau de travail (18) peut être déplacé à l'intérieur de la tête d'outil au moyen d'un moteur électrique logé dans la tête d'outil et alimenté en courant par l'intermédiaire du circuit de transmission d'énergie inductif.

40. Tête d'outil selon l'une des revendications 1 à 39 caractérisée en ce que la tête de balayage (100) est encastrée dans une plaque d'appui laquelle peut être fixée sur le corps de base (10) ou sur le coulisseau de travail (18), et peut être pivotée et ajustée, conjointement avec ladite plaque d'appui, autour d'un axe (108) perpendiculaire au plan des plaques de substrat, par rapport à la plaque de substrat (32) conformée en échelle de mesure.
